# EUROPEAN PATENT SPECIFICATION

(11) **EP 2 222 189 B1**
(45) Date of publication and mention of the grant of the patent: **21.12.2016**
(21) Application number: 08796156.1
(22) Date of filing: 11.07.2008
(51) Int. Cl.: A23L 7/117, A23L 33/21, A23L 7/161, A23L 29/244

(54) **FOOD COMPOSITIONS WITH DOUGH BINDERS AND METHODS RELATED THERETO**
NAHRUNGSMITTELZUSAMMENSETZUNG MIT TEIGBINDERN UND ENTSPRECHENDE VERFAHREN
COMPOSITIONS ALIMENTAIRES AVEC LIANTS EN PÂTE ET PROCÉDÉS CONNEXES

(30) Priority: 11.07.2007 US 949014 P
(43) Date of publication of application: 01.09.2010
(73) Proprietor: Kellogg Company, Battle Creek, MI 49016-3599 (US)
(72) Inventor: TREECE, Thomas, Z., Altamonte Springs, FL 32701 (US); ORTIZ, Deirdre, E., Battle Creek, MI 49014 (US); GHORPADE, Viswas, M., Portage, MI 49024 (US)
(74) Representative: Monzón de la Flor, Luis Miguel
(86) International application number: PCT/US2008/069754
(87) International publication number: WO 2009/009720

(56) References cited:
- EP-A- 1 817 964
- US-A- 5 759 612
- US-A1- 2004 028 797
- US-A1- 2004 219 280
- Anonymous: "Nusskuchen Stockholm (Rezept mit Bild) von gina_fl | Chefkoch.de", www.chefkoch.de, 9 February 2005 (2005-02-09), pages 1-9, XP055116491, Retrieved from the Internet: URL:http://www.chefkoch.de/rezepte/2896611 07826120/Nusskuchen-Stockholm.html [retrieved on 2014-05-06]
- Record ET AL: "Premium Breakfast Cereals", GNPD, 1 September 2006 (2006-09-01), pages 1-2, XP055163727, Retrieved from the Internet: URL:http://www.gnpd.com/sinatra/recordpage /594038/from_search/DTfFdqOPAX/ [retrieved on 2015-01-21]

## Description

### CROSS REFERENCE TO RELATED APPLICATION

This application claims the benefit of application serial number 60/949,014 filed on July 11,2007.

### FIELD OF THE INVENTION

The present invention provides food compositions useful as ready-to-eat cereals, snacks, and toppings, and processes for making them. Particularly, the present invention provides food compositions with crisp texture, reduced fat, and surprising bowl life when used as a ready-to-eat cereal. The present food compositions are also an improvement over previous toppings or snacks, in that the formulation allows for commercial-scale processing, with few fines. Moreover, since the present compositions comprise a dough binder rather than a sugar binder, nutritional supplementation is possible, such as the addition of fiber. Efficient processes are also provided for making the present food compositions. Superior intermediates and end products are therefore also provided.

### BACKGROUND OF THE INVENTION

Granolas, processed and natural grains, doughs and fiber are known ingredients. Moreover, combination of these ingredients in the form of cookies and bars are known; US Patent Number 4,871,557 provides an example. Clusters of food particulates have also been made in the past. Previous clusters were made by use of sugar syrups, such as those typically used to make traditional popcorn balls, or by creaming sugar and fat into a paste. Two such processes are described in US Patents 5,413,805 and 7,169,422. The prior art does not disclose food particulates with a dough binder, nor do they describe or suggest the superior compositions or processes described at length herein.

As a result, there is a need in the food industry for improved compositions and processes in the field of ready-to-eat cereals, toppings, and snacks, particularly those with superior nutritional and flavor qualities.

In the state of the art there are several documents related with the object of the invention:

US2004028797 A1, In this document is disclosed a preparation of agglomerated cereal product by feeding base cereal comprising crisp, friable cereal to coating reel, adding liquid oil, dry binder mix, and liquid sugar syrup, compressing, drying, and breaking up cereal into clusters. The invention is used for the preparation of an agglomerated cereal product. This invention has low fat content and exhibits extended crispness retention.

US2004219280 A1, which discloses a Crispy savory snack food product used as low fat snack food containing cereals, comprises cereals agglomerated by a binder containing sugar. The snack food product has low fat content with low perceived sweetness and benefits from the mechanistic properties of certain sugars.

US 5759612 A, discloses a solid food composition digested over extended period of time e.g. ready-to-eat cereal compositions which contains oat source of low, medium and high fibre, to release energy over extended period of time.

EP 1817964 A, discloses a sugar replacement composition useful for manufacture, e.g. of ice cream, pastry cream, yoghurt, comprises bulking fiber composition having polydextrose and maltodextrin and sweetener composition with high/low intensity sweetener.

### SUMMARY OF THE INVENTION

The present invention provides crunchy, moisture-resistant food compositions comprising food particulates bound into clusters via dough binders. The food particulates are preferably a combination of whole grains, and optional inclusions, such as dried fruit or nuts, seeds, and/or fiber. The dough binder is a cookie dough. One embodiment of the present invention is a food composition comprised of puffed rice, rolled oats, dried fruit, fiber and nuts, bound into clusters by cookie dough binder.

Intermediate, unbaked food compositions are claimed herein, as are baked final products. Processes for making the intermediate food compositions and baked food compositions are also provided.

The present compositions are superior to granolas, low fat granolas, and other ready-to-eat cereals, toppings and snacks in several aspects, including: the foods herein taste better, have a better texture and mouth feel, can be lower in fat, and have an excellent shelf life. Surprisingly, the use of dough binders in the present invention does not result in an unbaked intermediate that is matted, as would be expected. Moreover, the present baked compositions are light and crunchy, even when immersed in a liquid, such as milk. The baked clusters remain intact for a longer time period when exposed to liquid compared to clusters made with either sugar syrup binder or fat/sugar binder, and without immediately becoming soggy as would a cookie. Furthermore, the present processes are superior to those currently available in several aspects, including: reduced wet material handling, fewer processing steps, and efficiency of material handling.

Accordingly, it is an object of the present invention to provide food products having improved texture, flavor, shelf life, marketability, salability, processing efficiency, and health benefits.

The present invention also provides fiber-enriched dough binders, comprising: inulin fiber; resistant dextrin; citrus fiber powder; and cookie dough, wherein said fibers are at least 10% by weight of said binder, comprising: 3 to 7% inulin fiber; 4.5 to 7% resistant dextrin fiber; and 2.5 to 6% citrus fiber powder.

Also provided are granola-like foods having particulates bound into clusters by a binder, comprising: the food particulates and binder, wherein the ratio of particulates to binder, by volume, is greater than 1:1, and wherein the food resembles granola, with preferred embodiments comprising, by volume, from 1.1:1 to 2:1.

Intermediate, or ready-to-bake products are also provided, comprising: particulates and cookie dough-based binder, wherein said particulates to binder ratio is greater than 1:1, by weight.

Also disclosed are ready-to-eat granola-like foods comprising: particulates and cookie-dough based binder, wherein said particulates to binder ratio is greater than 1.5:1 ratio, by weight; wherein said food product has a moisture content of less than 5%; and wherein the food resembles granola. Preferred are those wherein the binder comprises at least 10% fiber by weight. Most preferred are those wherein the food is selected from the group consisting of: a ready-to-eat cereal; a ready-to-eat lopping; and a ready-to-eat snack.

Also provided are methods for making a food composition having crunchy and moisture-resistant attributes, comprising: a.) mixing particulates and cookie dough-based binder to form a mixture, b.) baking said mixture to less than 5% moisture, so as to result in a particulate to binder ratio of greater than 1:1, by weight, and so as to form a food composition resembling granola and having crunchy and moisture-resistant attributes.

Preferred are those methods wherein the binder comprises at least 10% fiber, based upon pre-baked weight. Most preferred are those wherein the food particulates comprise whole grain pieces, in particular those wherein the whole grain pieces comprise puffed rice, rolled oats; and grain bran.

Provided are granola-like foods, comprising: 10 to 50% unbaked cookie dough, used as a binder; 50 to 90% food particulates; wherein said percentages are by weight; with the particulates chosen so as to provide ease of processing and granola-like pieces when baked. After baking, the result is crunchy, surprisingly moisture resistant granola-like pieces, with optional functional attributes, such as nutritional enhancers and/or colors that attract consumers to the nutritionally-dense product.

These and other features and advantages of this invention will become more apparent to those skilled in the art from the definitions, drawings, detailed description, and examples provided herein.

### Definitions

"Cookie dough-based" means the use of any cookie dough as is known to those of ordinary skill in the art, with leavening agents, and sugar or other sweetening ingredient, and any other ingredient that does not disturb the ability of the dough to bind to food particulates.

"Fiber" means any food ingredient fiber as that term is known to those of ordinary skill in the art, and includes soluble and insoluble fibers. In this application, "fiber" means food ingredient fibers having been purified/condensed/isolated compared to the natural state, whether 100%) purified or any percentage up to that which is found in nature. For instance, "citrus fiber" does not include an orange, but does include orange pulp having residual juice. "Fiber" includes those from natural sources, such as from plants, as well as chemically engineered food fibers. The term fiber may also include mixtures of fibers in a variety of ratios.

"Particulate" means any food piece that is small enough to be eaten in one bite.

"Puffed grain" means any grain that has been popped, puffed, crisped, bubbled or otherwise forced to create a high surface area to weight ratio, including, but not limited to, traditional grain puffing, such as gun puffing, and direct expanded ready-to-eat cereal made from dough or grains.

"Unbaked" means not fully baked to a moisture content of less than 5%. Unbaked includes the conditions of never having been heated or those conditions where the food compositions are partially heated.

Throughout the specification and claims, percentages and ratios are by weight, and temperatures are in degrees Fahrenheit, unless otherwise indicated.

### DETAILED DESCRIPTION

### Food Particulates

The present invention provides food compositions comprising food particulates bound into clusters via dough binders, as well as intermediates and processes relating to the food compositions. Food particulates useful in the present invention may be any of those known in the art, and may include puffed grains, whole grains, flaked grains, bumped grains, nut meats, seeds, candy pieces, fruit pieces, fruit rind pieces, direct expanded dough-based cereal pieces. Any suitable whole, flaked, bumped, or puffed grain can be used, such as oats, wheat, barley, rye, and triticale. Any suitable method can be used to process the grain into edible particulates. Oat flakes, wheat flakes, barley flakes, rye flakes, and triticale flakes can be obtained from their respective whole grain in any manner known to those skilled in the art and in any desired size range. Processes for puffing grains or dough are also known to those skilled in the art, including direct expansion, gun puffing, or any other process that results in a high surface area to weight ration, and the size of the puffed grain particulate can be manipulated according to known methods.

Moreover, the food particulates of the present invention may include any nut meats, and fruits, as well as pieces, ground pastes or powders, or mixtures thereof. Use of candy pieces, such as chocolate, butterscotch, mint or yogurt chips are also within the scope of the present invention. In addition, it is physically possible to add vegetable, cheese or meat pieces (or artificial substitutes for those pieces, such as a cheese-flavored corn bit) to these food compositions, particularly if the dough were to be flavored with savory flavorings and the product used as a snack or topping. Therefore, any particulates, whether sweet, spicy or savory are within the present invention.

### Fibers

Moreover, the present invention includes food compositions comprising various fibers. When fiber is used as an ingredient in the present compositions, the fiber can function as either a particulate or a flour. Such dietary fiber includes both soluble and insoluble fiber, as well as sources generally known to contribute insoluble fiber, such as citrus fiber, soy fiber, apple fiber, corn bran, wheat bran, oat bran, wheat fiber, cocoa fiber, bamboo fiber, oat bran, barley bran, rye bran, triticale bran, beta-glucan, resistant dextrin, resistant starch, cellulose, pea fiber, sugar beet fiber, and peanut fiber. Sources generally known to contribute soluble fiber include but are not limited to fructo-oligo saccharides, inulin, gum arabic, gum ghatti, guar gumpectins, psyllium, carrageenans, xanthan, tragacanth, karaya, locust bean gum, agar, and alginates. Other fibers include polysaccharides, such as polydextrose and other complex sugar polymers or prebiotic fibers.

Fiber may be substituted for up to 100% of the flour in the dough binder, as shown in the Examples. When fiber is substituted, it preferably replaces 0-100% of the flour preferably 50-75%, most preferably 40-60%. In this sense, fiber may be considered a flour, but may also be used as a particulate.

### Dough Binders

The dough used in the present invention is cookie dough, or cookie dough with flavorings or colorings.

The dough is made from flour, moisture, and fat, but often includes an emulsifier and/or salt. The dough includes leavening agents and optionally, flavorants, and/or nutritive enhancers. A dough is often classified as a cookie dough if it contains a discernible level of sweetening agent and a leavening agent. Moreover, cookie dough generally has more fat than a cracker dough and less moisture. A hybrid of dough types may be used in the present invention so long as the physical properties described herein are achieved.

For instance, a hybrid cookie/cracker dough could be used to make food composition Type A, and a bagel dough could be used to make food composition Type B, and A and B could be tossed together to make a final box of cereal, topping, or snack. In another example, a chocolate cookie dough could be used for food composition Type C and a cinnamon cookie dough could be used for food composition Type D and after baking each batch, C and D could be tossed together to make a final box of cereal, toppings, or snack. Three or more combinations of dough binders, as well as various combinations of the present food compositions with other foods, is contemplated as within the scope of the present invention.

Any flour or fine fiber is useful as the flour ingredient in the present invention. Preferred flours for use in the present invention are pastry flour, wheat flour, fine bamboo fiber, fine whole wheat fiber, fine oat bran, and fine cocoa fiber, and digestion-resistant maltodextrin. However, also preferred is a general all purpose flour.

The fat component in a dough of the present invention can be any edible fat, oil, or shortening, including those that are solid at room temperature and those that are liquid at room temperature. Liquid shortenings or oils are useable and provide an advantage of ease of incorporation. Solid shortening is useable and provides an advantage of desirable mouth feel upon consumption of the baked good. More commonly used are mixtures of liquid and solid shortenings. These mixtures are fluid or plastic depending, in part, on the level of solid fatty materials. Liquid shortening includes animal shortening, marine fat, vegetable or synthetic oil, such as sucrose polyesters, which are liquid at ordinary room temperature. The fat component of the present invention may comprise natural or hydrogenated oils, including soybean oil, cottonseed oil, canola (rapeseed) oil, peanut oil, safflower oil, sesame oil, sunflower oil, poppyseed oil, coconut oil, palm oil, palm kernel oil, olive oil, butter fat, cocoa butter, tallow, lard, babassue, corn oil, or combinations thereof.

Sweeteners may optionally be added to the dough. Moreover, use of sweeteners is preferred in the dough binders of the present invention. Corn syrup and malt syrup are most preferred sweeteners for use in the present invention. However, according to the invention, any suitable sugar can be used in the present dough, including liquid or dry sugars. Typical sweeteners include corn syrup, high fructose corn syrup, maltose, malt syrup, malt syrup solids, honey, maple syrup, rice syrup, rice syrup solids, sorghum syrup, refiner syrup, corn syrup solids, dextrose, fructose, crystalline fructose, galactose, glucose, lactose, sucrose, brown or invert sugars, molasses, and other compositions that substantially comprise sugars, whether crystalline, syrup, or other physical form, and combinations thereof. Preferably, the dough of the present invention comprises sucrose as the form of granulated sugar. Sugar substitutes can also be used according to the invention including for example, saccharine, acesulfone K, aspartame, sucralose, d-tagalose, and the like. Sugar substitutes can be used in addition to, or as a substitute for, the sweetener.

The dough of the present invention also optimally comprises salt, for flavor and function. Any food grade salt is acceptable, although those in the art are aware that certain salts lend themselves to better results than others. For instance, the salt may be chosen from, but is not limited to, sodium chloride, potassium chloride, calcium chloride, naturally occurring sea or other salts, or combinations thereof.

Dough binders of the present invention also comprise a leavening component. The present invention comprises, in a preferred embodiment, baking soda and/or ammonium bicarbonate.

The dough binders used in the present invention can be sweet or savory or some combination thereof. Sweet flavors are those wherein the primary ingredients are sugars or ingredients containing sugars such as fruit, and could additionally contain sugar complimenting herbs and/or spices, such as mint, cinnamon, or nutmeg. Examples of fruit flavorants include pineapples, lemons, oranges, peaches, pears, grapes, mangos, apples, tomatoes, bananas, plums, blueberries, raspberries, strawberries, blackberries, currants, cherries, and mixtures thereof. Preferred fruits are selected from the group consisting of cranberries, cherries, raspberries, strawberries, and mixtures thereof. Such fruit flavor qualities may be from fruit powder, drum dried fruit solids, freeze dried fruit solids, fruit juice, fruit puree, evaporated fruit puree, or fruit juice concentrate. Prefered sweet flavorants are vanilla, cocoa, artificial chocolate flavors, and orange or other citrus oils.

Optionally, the present dough binders may comprise savory flavorant components. Flavorants may be any of those known in the art and include, for example, cheese, cheese powder, yeast, spices, paprika, garlic, herbs, fruit flavor, etc.

Nutritive enhancers may be also be incorporated into the dough binders of the present invention, and may include vitamins and minerals, stands, phytonutrients such as flavones, flavonols and flavanoids, phenols, and other antioxidants, as well as metabolic-enhancing agents, such as capsaicin, caffeine, and ginseng, for example. Moreover, protein enhancement via powdered milk, whey, whey protein concentrate, whey protein isolates, casein, soy protein concentrate, soy protein isolates, and the like are also contemplated as within the scope of the present invention.

### Granola-Like Food

Preferably, the food compositions of the present invention have a mean size of between about 2.54mm(0.1 inch) at the widest portion, to 1 inch at the widest portion. More preferably, the food compositions have a mean size of between about 5.08mm (0.2) inch at the widest portion, to 15.24mm (0.6 inch) at the widest portion. Ideally, the pieces resemble traditional granola, while providing added health benefits of fiber and better taste/texture perception.

The food compositions of the present invention preferably have a moisture content less than 5%, more preferably 2-3% after baking.

Modification of the present formulations so as to alter the cluster binding and size of cluster can be accomplished by either reducing the percentage of binder or increasing the percentage of higher surface area/weight ratio particulates used. For instance, low weight, high surface area particulates such as, for example puffed or crisp grains, such as rice bubbles or similar food particulates, may be used to decrease the amount of particulates used in each batch, or to achieve the desired cluster end-product. Approximately 5-10% rice bubbles, in a formula of particulates to dough having a 1:1 ratio, results in relatively light and less dense cluster.

Moreover, certain pre-treatments of particulates so as to render them less sticky to the binder, or more sticky, as the case may be, are within processing skills. For instance, sticky, dense particulates, such as cut fig or date pieces, could be tossed in oil to prevent binder from sticking to heavily and to avoid clumping. Other pieces, such as popped com, could be pre-coated with binder, then mixed with the other particulates and dough so as to assure clumping.

In another instance, substantial amounts of smaller particles, such as bran particles, can be added in addition to the high surface area to weight particles, to increase the fiber in the end product. Soluble fiber presence as a particulate, in particular, such as inulin or other fructo-oligo saccharides, may be imperceptible in the presence of the quantities of particulates needed to achieve the granola-like properties of the present invention.

The invention described herein is a significant improvement over the products previously known and the processing methods previously known. Food particulates are mixed with cookie dough such that the dough acts as a binder. The dough binder coats the surface of the food particulates and causes the particulates to clump together in an irregular manner. The unbaked intermediate can not be processed according to traditional granola means, nor can it be processed via cookie-baking means. The resulting unbaked intermediate is arranged on a band conveyor or sheet pan so that it does not have large unbaked pieces when finished, and baked at 148.88°C-204.44°C (300-400 degrees Fahrenheit) for 4-6 minutes, depending on browning desired. During the baking process, the particulates, lose enough moisture to result in 3-5% moisture content. These clusters do not maintain a cookie structure or a bar structure, and compared to cookies and bars the baked end product retains superior physical properties for months.

These formulas and processes are a remarkable improvement over the prior granolas, in terms of the ability to maneuver the processing techniques and the formulations. Flexibility in food products is always beneficial, and this invention provides much greater flexibility compared to other cereal products.

Moreover, when the inventive food compositions are placed in a bowl with milk, the food compositions surprisingly remain crunchy, and do not immediately become soggy, as would be expected if a cookie or cookie bar were placed in a bowl of milk. The ability to withstand contact with moisture also makes the present food compositions superior as a topping and as a snack, as does the size of the pieces.

The invention allows for lower fat formulations, lower sugar formulations, enhanced protein and nutrients for better nutrition than traditional granolas, and therefore, broader consumer appeal. Table I and Table II provide further information regarding this invention, but are intended to be used in addition to the entire specification, including the examples and the claims, when interpreting the scope of this invention.

**TABLE I Granola-like Food Compositions, Generally**

| INGREDIENT | Preferred %Dry wt. | More Preferred %Dry wt. | Most Preferred %Dry wt. |
|---|---|---|---|
| Flour and/or fiber | 7-20 | 10-17 | 13- 15 |
| Fat | 8- 13 | 9-12 | 10-11 |
| Moisture | 0-1 | .1-.5 | .2-.3 |
| Salt | 0-1 | 0-.5 | .1-.2 |
| Leavening Agent | .05-.4 | .1-.3 | .15-.25 |
| Sweetener | 0-20 | 10-15 | 12-14 |
| Flavorant | 0-10 | .05-5 | .1-5 |
| Particulates | 50-90 | 50-70 | 50-60 |

**Table II. Commercial-Scale Food Preparation, Typical Formulas, with Ranges.**

| **Granola-Like Food Preparation and Ranges** | **Preferred Range** (%) | **More Preferred Range** (%) |
|---|---|---|
| **Prepare Binder: Stage 1. Mix the following ingredients until blended, ideally, on medium-low speed in a single arm mixer** | | |
| Sugar | 5-20 | 10-15 |
| Palm oil | 5-15 | 5-10 |
| Salt | 0-2 | .1-.5 |
| Molasses (or other sweet flavor) | 0-10 | .5-5 |
| Honey (or other sweet flavor) | 0-20 | 1-10 |
| Baking soda 0-1, .1-.5 (or other pH modulator) | 0-1 | .1-.5 |

| **Stage 2. Add the following amount of water and mix until blended, ideally, on medium-low speed in same mixer** | | |
|---|---|---|
| **Water** | 3-15 | 5-10 |

| **Stage 3. Ideally, mix the following ingredients until blended, in same mixer** | | |
|---|---|---|
| Pastry Flour | 0-20 | 5-10 |
| Inulin | 0-10 | 2-5 |
| Resistant dextrin | 0-10 | 5-10 |
| Citrus fiber powder | 0-10 | 2-7 |

| **Stage 4. Ideally, add ammonia bicarbonate slurry during mixing, or other leavening agent** | | |
|---|---|---|
| Ammonia Bicarbonate (leavening) | **0-.5** | 0.05-0.2 |
| Water | **0-5** | .5-2 |
| **Total Binder** | **100%** | 100% |
| | | |

| **Prepare granola-like food - Blend the following ingredients, in a continuous mixer** | | |
|---|---|---|
| Binder | 10-50 | 35-50 |
| Puffed Rice | 0-10 | 5-10 |
| Rolled Oats | 30-55 | 30-40 |
| Infused fruit | 0-15 | 5-10 |
| Wheat bran | 0-10 | 1-5 |
| **Total Granola-like Food** | **100%** | **100%** |
| **Distribute granola-like food on baking surface (conveyor or baking sheet is acceptable), less than two inches in depth, preferably less than one inch, for relatively consistent baking throughout, and bake, ideally in a single-pass oven at least 300 degrees F for at 5 minutes, or to 5% moisture, preferably 2-3% moisture, or as product definition dictates.** | | |

The following examples 1 to 7 are provided, as further information, not being part of the invention, along with the specification and claims, in determining the scope of the present invention. No limitation is intended.

### EXAMPLES

### Example 1. Preparation of dough binder with pastry flour.

| INGREDIENT | GRAMS |
|---|---|
| Low linoleic soybean oil | 220.00 |
| Sugar | 130.00 |
| 6 X sugar | 150.00 |
| Dry whole egg | 30.00 |
| Salt | 3.00 |
| Vanilla 2X | 2.00 |
| Malt syrup | 4.00 |
| Water | 100.00 |
| 42 dextrose equivalent corn syrup | 50.00 |
| Baking soda | 3.00 |
| Ammonium bicarbonate | 1.20 |
| Water | 6.00 |
| Pastry flour | 300.80 |

The first five ingredients were creamed in an electric mixer for three minutes on medium speed. The next four ingredients were added and mixed on low for one minute, and then medium for one and one-half minute. The ammonium bicarbonate was dissolved in the water and set aside. The pastry flour and baking soda were added to the mixing bowl, along with the dissolved ammonium bicarbonate, and mixed on low.

### Example 2. Preparation of dough binder with pastry flour and fiber

| INGREDIENT | GRAMS |
|---|---|
| Low linoleic soybean oil | 220.00 |
| Sugar | 130.00 |
| 6 X sugar | 150.00 |
| Dry whole egg | 30.00 |
| Salt | 3.00 |
| Vanilla 2X | 2.00 |
| Malt syrup | 4.00 |
| Water | 100.00 |
| 42 dextrose equivalent corn syrup | 50.00 |
| Baking soda | 3.00 |
| Ammonium bicarbonate | 1.20 |
| Water | 6.00 |
| Pastry flour | 180.80 |
| Bamboo Fiber -fine | 120.00 |

The first five ingredients were creamed in an electric mixer for three minutes on medium speed. The next four ingredients were added and mixed on low for one minute, and then medium for one and one-half minute. The ammonium bicarbonate was dissolved in the water and set aside. The pastry flour, bamboo fiber, and baking soda were added to the mixing bowl, along with the dissolved ammonium bicarbonate, and mixed on low.

### Example 3. Preparation of dough binder with whole wheat flour and whole wheat fiber.

| INGREDIENT | GRAMS |
|---|---|
| Low linoleic soybean oil | 220.00 |
| Sugar | 130.00 |
| 6 X sugar | 150.00 |
| Dry whole egg | 30.00 |
| Salt | 3.00 |
| Vanilla 2X | 2.00 |
| Malt syrup | 4.00 |
| Water | 200.00 |
| 42 dextrose equivalent corn syrup | 50.00 |
| Baking soda | 3.00 |
| Ammonium bicarbonate | 1.20 |
| Water | 6.00 |
| Whole wheat flour (soft) | 190.80 |
| Whole wheat fiber | 110.00 |

The first five ingredients were creamed in an electric mixer for three minutes on medium speed. The next four ingredients were added and mixed on low for one minute, and then medium for one and one-half minute. The ammonium bicarbonate was dissolved in the water and set aside. The whole wheat flour, whole wheat fiber, and baking soda were added to the mixing bowl, along with the dissolved ammonium bicarbonate, and mixed on low.

### Example 4. Preparation of dough binder with fiber and flavorants.

| INGREDIENT | GRAMS |
|---|---|
| Low linoleic soybean oil | 220.00 |
| Sugar | 130.00 |
| 6 X sugar | 150.00 |
| Dry whole egg | 30.00 |
| Salt | 3.00 |
| Vanilla 2X | 2.00 |
| Malt syrup | 4.00 |
| Water | 100.00 |
| 42 dextrose equivalent corn syrup | 50.00 |
| Baking soda | 3.00 |
| Ammonium bicarbonate | 1.20 |
| Water | 6.00 |
| Soluble cocoa fiber | 264.00 |
| Cocoa powder (natural) | 25.00 |
| Cocoa powder (black) | 11.80 |
| Chocolate Cream Flavor | 8.00 |

The first five ingredients were creamed in an electric mixer for three minutes on medium speed. The next four ingredients were added and mixed on low for one minute, and then medium for one and one-half minute. The ammonium bicarbonate was dissolved in the water and set aside. The cocoa fiber, cocoa powder, (natural and black), chocolate cream flavor, and baking soda were added to the mixing bowl, along with the dissolved ammonium bicarbonate, and mixed on low.

### Example 5. Preparation of dough binder with whole wheat flour, soluble and insoluble fiber, and flavorants.

| INGREDIENT | GRAMS |
|---|---|
| Low linoleic soybean oil | 220.00 |
| Sugar | 130.00 |
| 6 X sugar | 150.00 |
| Dry whole egg | 20.00 |
| Salt | 3.00 |
| Vanilla 2X | 2.00 |
| Malt syrup | 4.00 |
| Water | 200.00 |
| 42 dextrose equivalent corn syrup | 50.00 |
| Baking soda | 3.00 |
| Ammonium bicarbonate | 1.20 |
| Water | 6.00 |
| Whole wheat flour (soft) | 210.00 |
| Whole wheat fiber | 75.00 |
| digestion-resistant maltodextrin (soluble fiber) | 90.00 |
| Orange oil | 5.00 |

The first five ingredients were creamed in an electric mixer for three minutes on medium speed. The next four ingredients were added and mixed on low for one minute, and then medium for one and one-half minute. The ammonium bicarbonate was dissolved in the water and set aside. The whole wheat flour, whole wheat fiber, soluble fiber, and flavorant (orange oil), and baking soda were added to the mixing bowl, along with the dissolved ammonium bicarbonate, and mixed on low.

### Example 6. Preparation of intermediate food compositions having rice bubbles and rolled oats.

350 grams of rice bubbles and 800 grams of rolled oats were mixed with a full batch of binder prepared according to Example 1, for one type of intermediate, and having a 1.2:1 ratio of rice and oats to binder. In that composition, the rice bubbles are approximately 16% of the total weight of dough and particulates. When 350 grams of rice bubbles and 800 grams of rolled oats were mixed with a full batch of binder prepared according to Example 5, for another type of intermediate, the ratio of rice and oats to binder is approximately 1.2:1, with the rice bubbles accounting for approximately 16% by weight of the total.

### Example 7. Preparation of intermediate food compositions having grains, nuts and fruit.

30 grams of flavor-infused cranberry pieces, 30 grams of almond slivers, 10 grams of candied orange rind, 300 grams of rice bubbles, and 800 grams of rolled oats were mixed with a full batch of dough binder prepared according to Example 5. The binder to particulate ratio was approximately 1.2:1, with the rice bubbles accounting for approximately 14% of the total weight.

### Example 8. Preparation of food compositions.

Intermediates of Examples 6 and 7 were baked on a perforated pan in a Lincoln oven for six minutes at 168.33°C (335°F). The baked compositions are then stirred and dried for five to seven minutes at 93,33°C (200°F) in a convection range oven.

## Claims

1. A fiber-enriched dough binder, comprising:
3 to 7% inulin; 4.5 to 7% resistant dextrin; and 2.5 to 6% citrus fiber powder; and cookie dough including flour, fat, water, a leavening agent, and a sweetening agent, wherein said fibers are at least 10% by weight of said binder.

2. A food having particulates bound into clusters by a binder, comprising: food particulates and the binder of claim 1, wherein the particulates comprise from 1 to 50% puffed grain products, wherein the ratio of particulates to binder, by weight, is greater than 1:1, and wherein the food resembles granola.

3. The food of claim 2, wherein the puffed grain products comprise puffed rice.

4. The food of claim 2, wherein the particulates are selected from the group consisting of: puffed grans; whole grains; flaked grains; bumped grains; nut meats; seeds; candy pieces; fruit pieces; fruit rind pieces; direct expanded dough-based cereal pieces; fiber; vegetable pieces; vegetable substitute pieces; cheese pieces; cheese substitute pieces; meat pieces and meat substitute pieces.

5. The food of any one of claims 2 to 4, which further comprises a fiber selected from the group consisting of: soy fiber, apple fiber, corn bran, wheat bran, oat bran, wheat fiber, cocoa fiber, bamboo fiber, oat bran, barley bran, rye bran, triticale bran, beta-glucan, resistant starch, cellulose, pea fiber, sugar beet fiber, and peanut fiber, gum arabic, gum ghatti, guar gum, pectins, psyllium, carrageenans, xanthan, tragacanth, karaya, locust bean gum, agar, and alginate, polysaccharide, polydextrose, and complex sugar polymer.

6. An unbaked food product, comprising:
food particulates; and
a dough binder coating a surface of the food particulates and causing the particulates to clump in an irregular manner, wherein said dough binder comprises: 3 to 7% inulin; 4.5 to 7% resistant dextrin; 2.5 to 6% citrus fiber powder; and cookie dough including flour, fat, water, a leavening agent, and a sweetener,
wherein the ratio of particulates to binder, by weight, is greater than 1:1.

7. The unbaked food product of claim 6, wherein the particulates comprise from 1 to 50% puffed grain products.

8. The unbaked food product of claim 6, wherein the particulates comprise 10% puffed rice.

9. The unbaked food product of claim 6, wherein the particulates are selected from the group consisting of: puffed grains; whole grains; flaked grains; bumped grains; nut meats; seeds; candy pieces; fruit pieces; fruit rind pieces; direct expanded dough-based cereal pieces; fiber; vegetable pieces; vegetable substitute pieces; cheese pieces; cheese substitute pieces; meat pieces and meat substitute pieces.

10. The unbaked food product of claim 6, which further comprises a fiber selected from the group consisting of: soy fiber, apple fiber, corn bran, wheat bran, oat bran, wheat fiber, cocoa fiber, bamboo fiber, oat bran, barley bran, rye bran, triticale bran, beta-glucan, resistant starch, cellulose, pea fiber, sugar beet fiber, and peanut fiber, fructo-oligo, saccharides, gum arabic, gum ghatti, guar gum, pectin, psyllium, carrageenans, xanthan, tragacanth, karaya, locust bean gum, agar, and alginate, polysaccharide, polydextrose, complex sugar polymer and prebiotic fiber.

11. A method for making a food composition having crunchy and moisture-resistant attributes, comprising:
a) mixing particulates and a fiber-enriched dough binder, comprising:
3 to 7% inulin; 4.5 to 7% resistant dextrin; and 2.5 to 6% citrus fiber powder; and
cookie dough including flour, fat, water, a leavening agent, and a sweetening agent,
wherein said fibers are at least 10% by weight of said binder, to form a mixture,
b) arranging the mixture on a band conveyor or sheet pan, and
c) baking said mixture to less than 5% moisture, so as to result in a particulate
to binder ratio of greater than 1:1 by weight, so as to form a food composition resembling granola.

12. The method of claim 11, wherein the ratio of particulates to binder, by weight, is from 1.1:1 to 2:1.

13. The method of claim 11, wherein the particulates comprise from 1 to 50% puffed grain products.

14. The method of claim 13, wherein the particulates comprise 10% puffed rice.

15. The method of claim 11, wherein the particulates are selected from the group consisting of: puffed grains; whole grains; flaked grains; bumped grains; nut meats; seeds; candy pieces; fruit pieces; fruit rind pieces; direct expanded dough-based cereal pieces; fiber; vegetable pieces; vegetable substitute pieces; cheese pieces; cheese substitute pieces; meat pieces and meat substitute pieces.

16. The method of claim 11, which further comprises a fiber selected from the group consisting of: soy fiber, apple fiber, corn bran, wheat bran, oat bran, wheat fiber, cocoa fiber, bamboo fiber, oat bran, barley bran, rye bran, triticale bran, beta-glucan, resistant starch, cellulose, pea fiber, sugar beet fiber, and peanut fiber, fructo-oligo, saccharides, gum arabic, gum ghatti, guar gum, pectin, psyllium, carrageenans, xanthan, tragacanth, karaya, locust bean gum, agar, and alginate, polysaccharide, polydextrose, complex sugar polymer and prebiotic fiber.

17. The method of any one of claims 11 to 16, wherein said food composition is selected from the group consisting of: a ready-to-eat cereal; a ready-to-eat topping; and a ready-to-eat snack.

## Patentansprüche

1. Ballaststoffangereicherter Teigbinder, umfassend:
3 bis 7 % Inulin; 4,5 bis 7 % resistentes Dextrin; und 2,5 bis 6 % Zitrusfrucht-Ballaststoffe in Pulverform; und Plätzchenteig, der Mehl, Fett, Wasser, ein Backtreibmittel und einen Süßstoff enthält, wobei die besagten Ballaststoffe mindestens 10 Gew.-% des besagten Binders ausmachen.

2. Nahrungsmittel mit durch einen Binder in Cluster gebundenen Partikeln, das Nahrungsmittelpartikel und den Binder nach Anspruch 1 umfasst, wobei die Partikel zwischen 1 und 50 % gepuffte Körnerprodukte umfassen, wobei das Gewichtsverhältnis von Partikel zu Binder größer als 1:1 ist und wobei das Nahrungsmittel einem Müsli gleicht.

3. Nahrungsmittel nach Anspruch 2, wobei die gepufften Körnerprodukte gepufften Reis umfassen.

4. Nahrungsmittel nach Anspruch 2, wobei die Partikel ausgewählt werden aus der Gruppe bestehend aus: gepufften Körnern; ganzen Körnern; geflockten Körnern; zerstoßenen Körnern; Nusskernen; Samenkörnern; Kandiszucker; Fruchtstückchen; Fruchtschalenstückchen; auf direkt aufgeblähtem Teig basierende Getreideflocken; Ballaststoffen; Pflanzenstückchen; Pflanzenersatz in Stückchen; Käsestückchen; Käseersatz in Stückchen; Fleischstückchen; und Fleischersatz in Stückchen.

5. Nahrungsmittel nach irgendeinem der Ansprüche 2 bis 4, das weiterhin einen Ballaststoff umfasst, der ausgewählt wird aus der Gruppe bestehend aus: Sojaballaststoff, Apfelballaststoff, Getreidekleie, Weizenkleie, Haferkleie, Weizenballaststoff, Kakao-Ballaststoff, Bambusfaser, Haferkleie, Gerstenkleie, Roggenkleie, Triticale-Kleie, beta-Glucan, resistenter Stärke, Cellulose, Erbsenfasern, Zuckerrübenfasern und Erdnussfasern, Gummi arabicum, Ghattigummi, Guargummi, Pektine, Flohsamen, Carrageene, Xanthan, Tragant, Karaya, Johannisbrotkernmehl, Agar und Alginat, Polysacchariden, Polydextrose und komplexen Zuckerpolymeren.

6. Nicht gebackenes Nahrungsmittelprodukt, umfassend:
Nahrungspartikel; und
einen Teigbinder, der die Oberfläche der Nahrungspartikel beschichtet und ein unregelmäßiges Verklumpen der Partikel verursacht, wobei der besagte Teigbinder 3 bis 7 % Inulin; 4,5 bis 7 % resistentes Dextrin; 2,5 bis 6 % Zitrusfrucht-Ballaststoffe in Pulverform; und einen Plätzchenteig umfasst, der Mehl, Fett, Wasser, ein Backtreibmittel und einen Süßstoff enthält,
wobei das Gewichtsverhältnis von Partikel zu Binder größer als 1:1 ist.

7. Nicht gebackenes Nahrungsmittelprodukt nach Anspruch 6, wobei die Partikel zwischen 1 und 50 % gepuffte Körnerprodukte umfassen.

8. Nicht gebackenes Nahrungsmittelprodukt nach Anspruch 6, wobei die Partikel 10 % gepufften Reis umfassen.

9. Nicht gebackenes Nahrungsmittelprodukt nach Anspruch 6, wobei die Partikel ausgewählt werden aus der Gruppe bestehend aus: gepufften Körnern; ganzen Körnern; geflockten Körnern; zerstoßenen Körnern; Nusskernen; Samenkörnern; Kandiszucker; Fruchtstückchen; Fruchtschalenstückchen; auf direkt aufgeblähtem Teig basierende Getreideflocken; Ballaststoffen; Pflanzenstückchen; Pflanzenersatz in Stückchen; Käsestückchen; Käseersatz in Stückchen; Fleischstückchen; und Fleischersatz in Stückchen.

10. Nicht gebackenes Nahrungsmittelprodukt nach Anspruch 6, das weiterhin einen Ballaststoff umfasst, der ausgewählt wird aus der Gruppe bestehend aus: Sojaballaststoff, Apfelballaststoff, Getreidekleie, Weizenkleie, Haferkleie, Weizenballaststoff, Kakao-Ballaststoff, Bambusfaser, Haferkleie, Gerstenkleie, Roggenkleie, Triticale-Kleie, beta-Glucan, resistenter Stärke, Cellulose, Erbsenfasern, Zuckerrübenfasern und Erdnussfasern, Fruktooligosacchariden, Gummi arabicum, Ghattigummi, Guargummi, Pektin, Flohsamen, Carrageene, Xanthan, Tragant, Karaya, Johannisbrotkernmehl, Agar und Alginat, Polysacchariden, Polydextrose, komplexen Zuckerpolymeren und präbiotischen Ballaststoffen.

11. Verfahren zur Herstellung einer Nahrungsmittelzusammensetzung mit knusprigen und feuchtigkeitsresistenten Eigenschaften, umfassend:
a) Mischen der Partikel und eines ballaststoffangereicherten Teigbinders, der 3 bis 7 % Inulin; 4,5 bis 7 % resistentes Dextrin; und 2,5 bis 6 % Zitrusfrucht-Ballaststoffe in Pulverform; und
Plätzchenteig, der Mehl, Fett, Wasser, ein Backtreibmittel und einen Süßstoff enthält, umfasst,
wobei die besagten Ballaststoffe mindestens 10 Gew.-% des besagten Binders ausmachen, zur Herstellung eines Gemisches,
b) Anordnen des Gemisches auf einem Förderband oder Backblech und
c) Backen des besagten Gemisches auf weniger als 5 % Feuchtigkeit, um ein Gewichtsverhältnis von Partikel zu Binder größer als 1:1 zu erhalten und eine müsliähnliche Nahrungsmittelzusammensetzung zu erzeugen.

12. Verfahren nach Anspruch 11, wobei das Gewichtsverhältnis von Partikel zu Binder zwischen 1,1:1 und 2:1 beträgt.

13. Verfahren nach Anspruch 11, wobei die Partikel zwischen 1 und 50 % gepuffte Körnerprodukte umfassen.

14. Verfahren nach Anspruch 13, wobei die Partikel 10 % gepufften Reis umfassen.

15. Verfahren nach Anspruch 11, wobei die Partikel ausgewählt werden aus der Gruppe bestehend aus: gepufften Körnern; ganzen Körnern; geflockten Körnern; zerstoßenen Körnern; Nusskernen; Samenkörnern; Kandiszucker; Fruchtstückchen; Fruchtschalenstückchen; auf direkt aufgeblähtem Teig basierende Getreideflocken; Ballaststoffen; Pflanzenstückchen; Pflanzenersatz in Stückchen; Käsestückchen; Käseersatz in Stückchen; Fleischstückchen; und Fleischersatz in Stückchen.

16. Verfahren nach Anspruch 11, das weiterhin einen Ballaststoff umfasst, der ausgewählt wird aus der Gruppe bestehend aus: Sojaballaststoff, Apfelballaststoff, Getreidekleie, Weizenkleie, Haferkleie, Weizenballaststoff, Kakao-Ballaststoff, Bambusfaser, Haferkleie, Gerstenkleie, Roggenkleie, Triticale-Kleie, beta-Glucan, resistenter Stärke, Cellulose, Erbsenfasern, Zuckerrübenfasern und Erdnussfasern, Fruktooligosacchariden, Gummi arabicum, Ghattigummi, Guargummi, Pektin, Flohsamen, Carrageene, Xanthan, Tragant, Karaya, Johannisbrotkernmehl, Agar und Alginat, Polysacchariden, Polydextrose, komplexen Zuckerpolymeren und präbiotischen Ballaststoffen.

17. Verfahren nach irgendeinem der Ansprüche 11 bis 16, wobei die besagte Nahrungsmittelzusammensetzung ausgewählt wird aus der Gruppe bestehend aus: einer verzehrfertigen Cerealie; einem verzehrfertigen Belag; und einem verzehrfertigen Snack.

## Revendications

1. Liant en pâte enrichie en fibres, qui comprend :3 à 7% d'inuline ; 4,5 à 7% de dextrine résistante ; et 2,5 à 6% de poudre de fibres d'agrumes ; et de la pâte à biscuits comprenant de la farine, de la matière grasse, de l'eau, un agent levant, et un édulcorant, où lesdites fibres représentent au moins 10% en poids dudit liant.

2. Aliment ayant des particules agglutinées en groupes par un liant, qui comprend : des particules alimentaires et le liant de la revendication 1, dans lequel les particules comprennent de 1 à 50% de produits à base de céréales soufflées, où le rapport en poids entre particules et liant est supérieur à 1:1, et où l'aliment ressemble au granola.

3. Aliment selon la revendication 2, dans lequel les produits à base de céréales soufflées incluent du riz soufflé.

4. Aliment selon la revendication 2, où les particules sont sélectionnées dans le groupe constitué de : céréales soufflées ; céréales complètes ; céréales en flocons ; céréales concassées ; farines de noix ; graines ; morceaux de bombons ; morceaux de fruits ; morceaux d'écorces de fruits ; céréales à base de pâte à expansion directe ; fibres ; morceaux de légumes ; morceaux de substituts de légumes; morceaux de fromage ; morceaux de substituts de fromage ; morceaux de viande et morceaux de substituts de viande.

5. Aliment selon l'une quelconque des revendications 2 à 4, qui comprend en outre une fibre sélectionnée dans le groupe composé de : fibre de soja, fibre de pomme, son de maïs, son de blé, son d'avoine, fibre de blé, fibre de cacao, fibre de bambou, son d'avoine, son d'orge, son de seigle, son de triticale, bêta-glucane, amidon résistant, cellulose, fibre de pois, fibre de betterave à sucre, et fibre de cacahuète, gomme arabique, gomme ghatti, gomme de guar, pectines, psyllium, carraghénanes, xanthane, adragante, karaya, gomme de caroube, agar, et alginate, polysaccharide, polydextrose, et polymère de sucre complexe.

6. Produit alimentaire non cuit, qui comprend : des particules alimentaires ; et un liant de pâte pour le nappage d'une surface des particules alimentaires qui permet aux particules de s'agglutiner d'une manière irrégulière, où ledit liant de pâte comprend : 3 à 7% d'inuline ; 4,5 à 7% de dextrine résistante ; 2,5 à 6% de poudre de fibres d'agrumes ; et une pâte à biscuits comprenant de la farine, de la matière grasse, de l'eau, un agent levant, et un édulcorant, où le rapport en poids entre particules et liant est supérieur à 1:1.

7. Produit alimentaire non cuit selon la revendication 6, où les particules comprennent 1 à 50% de produits à base de céréales soufflées.

8. Produit alimentaire non cuit selon la revendication 6, où les particules comprennent 10% de riz soufflé.

9. Produit alimentaire non cuit selon la revendication 6, où les particules sont sélectionnées dans le groupe composé de : céréales soufflées ; céréales complètes ; céréales en flocons ; céréales concassées ; farines de noix ; graines ; morceaux de bombons ; morceaux de fruits ; morceaux d'écorces de fruit ; céréales à base de pâte à expansion directe ; fibres ; morceaux de légumes ; morceaux de substituts de légumes ; morceaux de fromage ; morceaux de substituts de fromage ; morceaux de viande et morceaux de substituts de viande.

10. Produit alimentaire non cuit selon la revendication 6, qui comprend en outre une fibre sélectionnée dans le groupe composé de : fibres de soja, fibre de pomme, son de maïs, son de blé, son d'avoine, fibres de blé, fibres de cacao, fibres de bambou, son d'avoine, son d'orge, son de seigle, son de triticale, bêta-glucane, amidon résistant, cellulose, fibres de pois, fibres de betterave à sucre, et fibres de cacahuète, fructo-oligo-saccharides, gomme arabique, gomme ghatti, gomme de guar, pectine, psyllium, carraghénanes, xanthane, adragante, karaya, gomme de caroube, agar, et alginate, polysaccharide, polydextrose, polymère de sucre complexe et fibres prébiotiques.

11. Méthode de fabrication d'une composition alimentaire ayant des propriétés de résistance à l'humidité et une texture croustillante, qui consiste à :
a) mélanger des particules et un liant de pâte enrichie en fibres, qui comprend :3 à 7% d'inuline ; 4,5 à 7% de dextrine résistante ; et 2,5 à 6% de poudre de fibres d'agrumes ; et de la pâte à biscuits comprenant de la farine, de la matière grasse, de l'eau, un agent levant, et un édulcorant, où lesdites fibres représentent au moins 10% en poids dudit liant, pour former un mélange,
b) placer le mélange sur une bande transporteuse ou une plaque de four, et
c) cuire ledit mélange avec un taux d'humidité inférieur à 5%, afin d'obtenir un rapport en poids entre particules et liant supérieur à 1:1, pour former une composition alimentaire qui ressemble au granola.

12. Méthode selon la revendication 11, où le rapport en poids entre particules et liant est de 1.1:1 à 2:1.

13. Méthode selon la revendication 11, où les particules incluent de 1 à 50% de produits à base de céréales soufflées.

14. Méthode selon la revendication 13, où les particules incluent 10% de riz soufflé.

15. Méthode selon la revendication 11, où les particules sont sélectionnées dans le groupe composé de : céréales soufflées ; céréales complètes ; céréales en flocons ; céréales concassées ; farines de noix ; graines ; morceaux de bombons ; morceaux de fruits ; morceaux d'écorces de fruit ; céréales à base de pâte à expansion directe ; fibres ; morceaux de légumes ; morceaux de substituts de légumes ; morceaux de fromage ; morceaux de substituts de fromage ; morceaux de viande et morceaux de substituts de viande.

16. Méthode selon la revendication 11, qui comprend en outre une fibre sélectionnée dans le groupe composé de : fibres de soja, fibres de pomme, son de maïs, son de blé, son d'avoine, fibres de blé, fibres de cacao, fibres de bambou, son d'avoine, son d'orge, son de seigle, son de triticale, bêta-glucane, amidon résistant, cellulose, fibres de pois, fibres de betterave à sucre, et fibres de cacahuète, fructo-oligo-saccharides, gomme arabique, gomme ghatti, gomme de guar, pectines, psyllium, carraghénanes, xanthane, adragante, karaya, gomme de caroube, agar, et alginate, polysaccharide, polydextrose, polymère de sucre complexe et fibres prébiotiques.

17. Méthode selon l'une quelconque des revendications 11 à 16, où ladite composition alimentaire est sélectionnée dans le groupe composé de : une céréale prête à consommer ; un nappage prêt à consommer ; et un en-cas prêt à consommer.
